# EUROPÄISCHE PATENTSCHRIFT

(11) **EP 2 198 974 B1**
(45) Veröffentlichungstag und Bekanntmachung des Hinweises auf die Patenterteilung: **17.07.2013**
(21) Anmeldenummer: 08021829.0
(22) Anmeldetag: 16.12.2008
(51) Int. Cl.: B05B 7/06, G01N 21/53, B05B 12/00

(54) **Abgabevorrichtung mit optischer Sensoranordung**
Discharge device with optical sensor
Dispositif de distribution avec capteur optique

(43) Veröffentlichungstag der Anmeldung: 23.06.2010
(73) Patentinhaber: Bausch + Ströbel Maschinenfabrik Ilshofen GmbH + Co. KG, 74532 Ilshofen (DE)
(72) Erfinder: Bullinger, Siegfried, 74532 Ilshofen (DE); Bauer, Harald, 74549 Wolpertshausen (DE); Seiffer, Thomas, 74589 Satteldorf (DE)
(74) Vertreter: Tiesmeyer, Johannes

(56) Entgegenhaltungen:
- WO-A-03/062129
- US-A- 5 558 902
- US-A- 5 843 527
- US-A- 5 913 455
- US-A1- 2002 113 198

## Beschreibung

Die vorliegende Erfindung betrifft eine Abgabevorrichtung, insbesondere Düsenvorrichtung, zum Abgeben eines Stoffes in Aerosolform oder in flüssiger Form, insbesondere zur Beschichtung von Gegenständen mit dem Stoff, umfassend eine längliche Stoffzuführleitung und eine Stoffabgabeöffnung, welche im Bereich eines freien Endes der Stoffzuführleitung angeordnet ist und aus welcher der abzugebende Stoff aus der Abgabevorrichtung austritt wobei die Abgabevorrichtung eine optische Sensoranordnung aufweist, die derart angeordnet ist, dass im Aerosol enthaltener Stoff detektierbar ist, wobei die Sensoranordnung wenigstens teilweise in die Stoffzuführleitung integriert ist und die Sensoranordnung wenigstens einen Lichtwellenleiter umfasst.

Derartige Abgabevorrichtungen werden beispielsweise verwendet, um Hohlkörper auf ihrer Innenseite mit einem bestimmten Stoff beschichten zu können, wobei der Stoff durch Aufsprühen verteilt wird. Dabei wird in der Regel die längliche Stoffzuführleitung in einen entsprechenden Hohlkörper eingeführt und beim Herausziehen aus dem Hohlkörper wird die Stoffbeschichtung durch Versprühen des Aerosols erreicht. Bei derartigen Beschichtungsvorgängen ist es wichtig, dass der Beschichtungsstoff auch tatsächlich im Aerosol enthalten ist, insbesondere auch in ausreichender Konzentration, damit eine gewünschte Beschichtung auch tatsächlich erreicht werden kann. Es ist somit erforderlich, die Stoffabgabe bei der Abgabevorrichtung zu überprüfen, um eine verlässliche Information darüber zu erhalten, ob Stoff aus der Abgabevorrichtung abgegeben wurde. Falls kein Stoff abgegeben wurde, könnte dies ein Hinweis auf eine Verstopfung in der Stoffzuführleitung oder auf einen sonstigen Defekt sein.

Konkret werden derartige Abgabevorrichtungen beispielsweise zum Versprühen von Silikon verwendet, um die Innenseite von Spritzen oder Kartuschen mit einem Silikonfilm zu besprühen, so dass die Gleitreibung für den Spritzenkolben beim Abgeben des Spritzeninhalts minimiert ist.

Diese Düsen zum Silikonisieren kommen bei der Beschichtung von Spritzen in größeren Gesamtanlagen zum Einsatz, wobei die Spritzenbehälter zuerst gewaschen, anschließend getrocknet, silikonisiert und schließlich sterilisiert werden, bevor dann die Verpackung eines leeren Spritzenkörpers erfolgt oder die Befüllung des Spritzenkörpers mit anschließender Verpackung. Es hat sich dabei gezeigt, dass der Schritt des Silikonisierens und insbesondere der Prüfung der Silikonisierung bei bekannten Anlagen außerhalb einer Geräteeinheit, in welcher gewaschen und getrocknet wird, durchgeführt werden muss. Dies liegt insbesondere daran, dass in einer derartigen Waschanlage raue Bedingungen herrschen, wobei aufgrund der Reinigung viel Kondensat im Arbeitsraum der Vorrichtung und auch in der Umgebungsluft vorhanden ist. Somit müssen bei den bekannten Vorrichtungen die zu beschichtenden Spritzen bzw. Behälter aus der Wasch-/ Trockenanlage herausgenommen und in die gesonderte Silikonisiervorrichtung eingesetzt werden, was den Vorgang allerdings zeitaufwendiger und von den Arbeitsschritten her komplexer macht.

Die US 5,558,902 A offenbart eine Vorrichtung zur Erfassung von Verunreinigungen in einer Flüssigkeit, die für eine Beschichtung verwendet wird. Dazu wird Licht im Inneren einer Leitung für die Flüssigkeit in einer Glasfaser geführt. Aus der Faser austretendes Licht beleuchtet die Flüssigkeit, so dass Verunreinigungen aufgrund ihrer Streulichtwirkung mit einem Detektor erfasst werden können.

Aufgabe der Erfindung ist es, eine Abgabevorrichtung der im Oberbegriff des Anspruchs 1 genannten Art derart weiterzubilden, dass eine größere Konstruktionsfreiheit und eine verbesserte Erfassungssicherheit ermöglicht wird.

Erfindungsgemäß wird zur Lösung dieser Aufgabe vorgeschlagen, dass die Sensoranordnung zwei Lichtwellenleiter umfasst, wobei der eine Lichtwellenleiter zur Abgabe von elektromagnetischer Strahlung, vorzugsweise Licht oder Infrarotstrahlung, im Bereich der Stoffabgabeöffnung nach außen dient, und der andere Lichtwellenleiter zum Aufnehmen und zur Weiterleitung von reflektierter elektromagnetischer Strahlung zu einer zugehörigen Detektionseinheit, vorzugsweise einer fotosensitiven Zelle, dient, wobei die Wellenleiter in die längliche Stoffzuführleitung eingesetzt sind.

Mit einer derartigen optischen Sensoranordnung können Rückschlüsse auf die durch den Stoff erfolgte korrekte Beschichtung gezogen werden, da das Vorhandensein von Partikeln des Stoffs im Aerosol erfasst wird, was ein Indikator dafür ist, ob der Stoff überhaupt und ggf. ausreichend im Aerosol enthalten ist. Dabei kann ein derartiger in die Abgabevorrichtung aufgenommener, vorzugsweise integrierter Sensor auch unter rauen Umgebungsbedingungen arbeiten, da die Optik der Sensoranordnung auf den zu detektierenden Stoff angepasst werden kann, wobei andere ggf. im Aerosol bzw. der Umgebungsluft enthaltene Partikel keine nennenswerten Störsignale hervorrufen bzw. Störsignale erzeugen, die herausgefiltert oder nicht berücksichtigt werden.

Erfindungsgemäß ist diese Sensoranordnung wenigstens teilweise in die Stoffzuführleitung integriert. Dabei ist insbesondere vorgesehen, dass die Sensoranordnung relativ zur Stoffzuführleitung derart fixiert oder fixierbar ist, dass zwischen dem Innenumfang der Stoffzuführleitung und einer Außenkontur eines in der Stoffzuführleitung aufgenommenen Abschnitts der Sensoranordnung eine Art Ringspalt gebildet ist, durch welchen der Stoff zur Stoffabgabeöffnung strömt.

Die wenigstens teilweise Integration der Sensoranordnung in der Stoffzuführleitung ermöglicht eine kompakte Bauweise der Abgabevorrichtung, ohne dass am grundsätzlichen Aufbau der Abgabevorrichtung wesentliche Veränderungen vorgenommen werden müssen. Insbesondere ist die Sensoranordnung derart ausgebildet, dass sie auch bei einer älteren Abgabevorrichtung ohne Sensoranordnung nachgerüstet werden kann, da die Sensoranordnung im Wesentlichen einfach in die Stoffzuführleitung eingeführt und relativ zu dieser fixiert wird. Dass hierdurch ggf. der durchströmte Querschnitt der Stoffzuführleitung verkleinert wird, stellt kein nennenswertes Problem dar, da durch den übrigen durchströmten Querschnitt die gleiche Materialmenge bei etwas höherem Druck gepresst bzw. gepumpt werden kann.

Die Sensoranordnung weist erfindungsgemäß wenigstens einen Lichtwellenleiter auf, welcher beispielsweise zum Leiten und Abgeben von elektromagnetischer Strahlung, insbesondere Licht oder Infrarotstrahlung, dient oder welcher an Partikeln des Aerosols reflektierte elektromagnetische Strahlung aufnimmt und zu einem Detektor leitet. Sofern ein einzelner Lichtwellenleiter vorgesehen ist, kann eine vom Lichtwellenleiter gesonderte Lichtquelle bzw. ein gesonderter Detektor zum Einsatz kommen, die an einer geeigneten Stelle angeordnet sind, um entweder Strahlung abzugeben oder reflektierte Strahlung zu detektieren.

Erfindungsgemäß umfasst die Sensoranordnung zwei Lichtwellenleiter, wobei der eine Lichtwellenleiter zur Abgabe von elektromagnetischer Strahlung, vorzugsweise Licht oder Infrarotstrahlung, im Bereich der Stoffabgabeöffnung nach außen dient, und der andere Lichtwellenleiter zum Aufnehmen und zur Weiterleitung von reflektierter elektromagnetischer Strahlung zu einer zugehörigen Detektionseinheit, vorzugsweise einer fotosensitiven Zelle, dient. Die verwendeten Lichtwellenleiter weisen den Vorteil auf, dass sie im Durchmesser sehr klein sein können und dass sie sehr gut in die längliche Stoffzuführleitung der Abgabevorrichtung einführbar bzw. einsetzbar sind. Hierdurch ist es möglich, dass zur Detektion von Stoffpartikeln im Aerosol erforderliche elektromagnetische Strahlung an einem entfernten Ort erzeugt werden kann und ebenso die reflektierte elektromagnetische Strahlung an einem entfernten Ort detektiert werden kann, so dass im Bereich der das Aerosol abgebenden Düse keine empfindlichen elektronischen Bauteile angeordnet werden müssen.

Vorzugsweise steht die Sensoranordnung im Bereich der Stoffabgabeöffnung der Stoffzuführleitung in axialer Richtung über den Rand der Stoffzuführleitung vor. Ein derartiges Vorstehen der Sensoranordnung verhindert nach dem Beschichtungsvorgang Tropfenbildung am optischen Ausgang bzw. Eingang der Sensoranordnung, da die für Tropfenbildung zur Verfügung stehende Fläche klein gehalten ist. Ferner wird durch das Vorstehen der Sensoranordnung eine Kante gebildet, an welcher das Anhaften von Tropfen weiter erschwert ist. Zusätzlich ermöglicht eine derart gestufte Anordnung ein besseres Wegblasen von Stoffrückständen zu Beginn eines Beschichtungsvorgangs, wenn zum Erzeugen des Aerosols zuerst Luft bzw. Gas unter Druck aus der Abgabevorrichtung ausströmt und anschließend die Zuführung des Stoffs zur Aerosolbildung beginnt.

Die Sensoranordnung umfasst vorzugsweise eine Strahlungsquelle, vorzugsweise Lichtquelle oder Infrarotquelle, wobei es bevorzugt ist, dass die ausgesendete elektromagnetische Strahlung rotes Licht ist mit einer Wellenlänge von etwa 600 nm und mehr.

Wie bereits erwähnt, ist es bevorzugt, dass die Sensoranordnung im Bereich der Stoffabgabeöffnung in axialer Richtung über den Rand der Stoffzuführleitung vorsteht, wobei dabei insbesondere die Lichtwellenleiter über den Rand der Stoffzuführleitung vorstehen, so dass die Lichtwellenleiter in gewisser Weise freie Sicht auf ihre Umgebung haben, so dass das Aussenden und Aufnehmen von elektromagnetischer Strahlung nicht durch vorstehende Kanten oder Ränder der Stoffzuführleitung oder weiteren Komponenten der Düse behindert ist. Selbstverständlich sind auch andere relative Anordnungen möglich je nach Einsatzzweck der Abgabevorichtung. Die Sensoranordnung kann auch mit dem Rand der Stoffzufuhrleitung in etwa fluchten oder axial nach hinten versetzt sein. Im letzteren Fall wird ein sehr enges "Gesichtsfeld" der Sensoranordnung erreicht.

Bevorzugt ist die Stoffzuführleitung von einer Gaszuführleitung umgeben, welche vorzugsweise konzentrisch zur Stoffzuführleitung angeordnet ist, und deren Gasabgabeöffnung im Bereich der Stoffabgabeöffnung liegt, wobei es bevorzugt ist, dass die Stoffabgabeöffnung in Abgaberichtung des Stoffes axial vor der Gasabgabeöffnung liegt. Eine derartige Ausgestaltung ermöglicht einen Austritt des Gases zur Aerosolbildung entlang des Außenumfangs des vorstehenden Abschnitts der Stoffzuführleitung, wodurch vor der Stoffabgabeöffnung eine Art Gas bzw. Luftkissen ausgebildet wird, mit welchem die dann abgegebenen Stoffpartikel zur Aerosolbildung mitgerissen werden. Auch die Stoffabgabeöffnung und die Gasabgabeöffnung können alternativ in axialer Richtung eine etwa gleiche Position einnehmen oder es ist auch denkbar, dass die Stoffabgabeöffnung in Stoffabgaberichtung hinter der Gasabgabeöffnung liegt.

Die Stoffzuführleitung und die Gaszuführleitung sind vorzugsweise mit einem Anschlussstück verbunden, an welchem Versorgungsleitungen für den Stoff und für Gas anschließbar sind. Ein derartiges Anschlussstück kann beispielsweise am Ende der länglichen Stoffzuführleitung vorgesehen sein, so dass die Stoffzuführleitung, die sie umgebende Gaszuführleitung und die in der Stoffzuführleitung aufgenommenen Lichtwellenleiter der Sensoranordnung problemlos in einen länglichen Behälter, beispielsweise eine Spritze oder dgl., zwecks Beschichtung derselben eingeführt werden können, ohne dass das Anschlussstück beim Beschichtungsvorgang hinderlich ist.

Das zur Bildung des Aerosols verwendete Gas kann auch ein Gasgemisch sein, vorzugsweise handelt es sich dabei um Luft. Allerdings ist es durchaus denkbar, dass ein anderes Gasgemisch verwendet wird, sofern die im Aerosol enthaltenen Stoffpartikel beispielsweise mit Luft reagieren würden und eine Aerosolbildung unter einer Art Schutzgasatmosphäre oder dgl. erzeugt werden muss.

Die Lichtwellenleiter erstrecken sich vorzugsweise durch das Anschlusstück hindurch und sind an dem vom Stoffzuführrohr gegenüberliegenden Ende des Anschlussstücks aus diesem herausgeführt, wobei die Lichtwellenleiter außerhalb des Anschlussstücks vorzugsweise von einer beweglichen Hülle umgeben sind. Das Anschlussstück bildet somit für die Lichtwellenleiter auch einen Übergang vom die Lichtwellenleiter umgebenden starren Rohr zu einer beweglichen Hülle, beispielsweise in Form einer Art Kabel, so dass die Lichtwellenleiter an entsprechende Strahlungsquellen und Detektionseinheiten angeschlossen werden können. Dabei ist auch zu berücksichtigen, dass die Abgabevorrichtung während des Beschichtens bewegt wird, so dass eine bewegliche Anbringung der Lichtwellenleiter an der Abgabevorrichtung sehr vorteilhaft ist.

Die Sensoranordnung ist mit dem Anschlussstück gekoppelt oder koppelbar, wobei vorzugsweise eine Presssitzverbindung oder eine Gewindeverbindung zum Einsatz kommen.

Der durch die Abgabevorrichtung abzugebende Stoff kann pulverförmig oder flüssig sein, so dass entweder ein Aerosol mit festen Stoffpartikeln oder ein Aerosol mit flüssigen Stoffpartikeln gebildet wird. Es sei an dieser Stelle auch darauf hingewiesen, dass eine derartige Sensoranordnung beispielsweise bei pulverförmigem Stoff nicht ausschließlich zur Beschichtung verwendet werden kann, sondern dass es durchaus denkbar ist, mit einer leicht modifizierten Abgabevorrichtung eine Befüllung eines Behälters vorzunehmen, wobei während der Befüllung eine optische Detektion erfolgen kann, ob kontinuierlich und ausreichend Stoff abgegeben wird. Dabei ist insbesondere zu beachten, dass bei der Abgabe von pulverförmigem Stoff auch ohne oder nur bei geringer Zufuhr von einem Gas bzw. Luft im Bereich der Stoffabgabeöffnung ein Aerosol gebildet wird aufgrund von in der Umgebungsluft schwebenden Pulverpartikeln.

Der abzugebende Stoff ist in einer bevorzugten Ausgestaltung Silikon, vorzugsweise in Form einer Silikonemulsion oder von Silikonöl.

Die Erfindung betrifft in einem weiteren Aspekt auch eine Vorrichtung zum Behandeln von Behältern, wie beispielsweie Spritzenbehältern, Karpulen, Vials und dergleichen, umfassend wenigstens eine Waschstation und/oder wenigstens eine Trockenstation und/oder wenigstens eine Sterilisierstation, wobei diese Vorrichtung ferner wenigstens eine Beschichtungsstation umfasst, die wenigstens eine zuvor beschriebene Abgabevorrichtung umfasst, um den Behälter auf seiner Innenseite zu beschichten.

Es ist darauf hinzuweisen, dass das Prinzip einer derartigen Sensoranordnung auch bei anderen Flüssigkeiten wie Silikonemulsion oder Silikonöl funktioniert. Beispielsweise kann ein derartiger Sensor auch mit Wasser oder nicht klaren Flüssigkeiten verwendet werden. Ferner ist es auch möglich, mit einer derartigen Sensoranordnung einzelne, insbesondere größere Tropfen von Flüssigkeiten zu detektieren, die beispielsweise an der Sensoranordnung anhaften zu Beginn oder am Ende der Aerosolbildung.

Im Zusammenhang mit der bevorzugten Silikonisierung hat sich auch gezeigt, dass Anomalien beim Beschichten erfassbar sind, beispielsweise eine an der Abgabevorrichtung ausgebildete Silikonblase, welche mit Luft gefüllt ist.

Die durch die Sensoranordnung erzeugten Signale lassen Rückschlüsse auf das grundsätzliche Abgeben von Stoff und auch die abgegebene Stoffmenge zu, wodurch eine Plausibilitätskontrolle der abgegebenen Stoffmenge ermöglicht ist. Sofern während des Beschichtungsvorgangs die von der Sensoranordnung erfassten Sensorsignale nicht vorbestimmten Erwartungswerten entsprechen, kann davon ausgegangen werden, dass bei der Abgabevorrichtung bzw. der Sensoranordnung eine Fehlfunktion vorliegt, beispielsweise kann eine Verstopfung der Stoffzuführleitung vorliegen, so dass kein oder nur wenig Stoff abgegeben wird, was sich unmittelbar auf die Stoffpartikeldichte im Aerosol auswirkt und zu anderen Detektionssignalen führt.

Das zur optischen Detektion verwendete Licht ist nicht auf rotes Licht beschränkt, sondern es kann auch grünes Licht oder blaues Licht verwendet werden. Beim bereits erwähnten roten Licht hat sich gezeigt, dass sich dieses Licht sehr gut für die Erfassung von Silikon eignet, insbesondere wird Silikonöl zerstäubt im Aerosol und unzerstäubt erkannt. Mit dem roten Licht hat sich auch gezeigt, dass Wasser beispielsweise nur zerstäubt erkannt wird. Das in der Sensoranordnung bzw. Abgabevorrichtung verwendete Licht kann somit je nach Anwendung ausgewählt bzw. angepasst werden. Als Lichtquellen kommen Leuchtdioden (LED), Laser und dgl. in Frage.

Bei der Sensoranordnung bildet der eine Lichtwellenleiter zusammen mit der Strahlungsquelle eine Art Sender für elektromagnetische Strahlung und der andere Lichtwellenleiter bildet zusammen mit der Detektionseinheit (fotosensitive Zelle) eine Art Empfänger, so dass elektromagnetische Strahlung ausgesendet und der an Stoffpartikeln reflektierte Anteil dieser elektromagnetischen Strahlung wieder empfangen werden kann.

Ein weiterer Vorteil der in der Abgabevorrichtung vorgesehenen Sensoranordnung ist darin zu sehen, dass die Sensoranordnung unempfindlich gegenüber Temperaturänderungen, insbesondere gegenüber hohen Temperaturen ist. Das ermöglicht einerseits eine insbesondere vollautomatische Reinigung bzw. Sterilisierung der zusammengebauten Abgabevorrichtung samt Sensoranordnung mittels Dampf bei Temperaturen ab etwa 120°C. Andererseits bietet diese Unempfindlichkeit gegenüber höheren Temperaturen auch die Möglichkeit, einen erwärmten Stoff, beispielsweise erwärmtes Öl zwecks Verringerung der Viskosität, zuzuführen bei Temperaturen von beispielsweise etwa 40°C bis 90°C.

Die Erfindung wird nachfolgend anhand einer beispielhaften und nicht einschränkenden Ausführungsform unter Bezugnahme auf die anliegenden Figuren beschrieben.
- Fig. 1: zeigt eine Seitenansicht auf eine Ausführungsform der Abgabevorrichtung der vorliegenden Erfindung.
- Fig. 2: zeigt einen Längsschnitt in axialer Richtung der Abgabevorrichtung der Fig. 1.
- Fig. 3: zeigt eine Draufsicht auf die Abgabevorrichtung von der Seite der Stoffabgabeöffnung.
- Fig. 4: zeigt die Sensoranordnung ohne umgebende Stoffzuführleitung und Gaszuführleitung.
- Fig. 5: zeigt einen vergrößerten Querschnitt des Endbereichs der Abgabevorrichtung.
- Fig. 6: zeigt eine stark vereinfachte, vergrößerte Draufsicht auf die Abgabevorrichtung.
- Fig. 7: zeigt vereinfacht und schematisch das Beschichten eines Behälters mittels der Abgabevorrichtung.
- Fig. 8: zeigt ein vereinfachtes, schematisches Diagramm der Sensoranordnung.

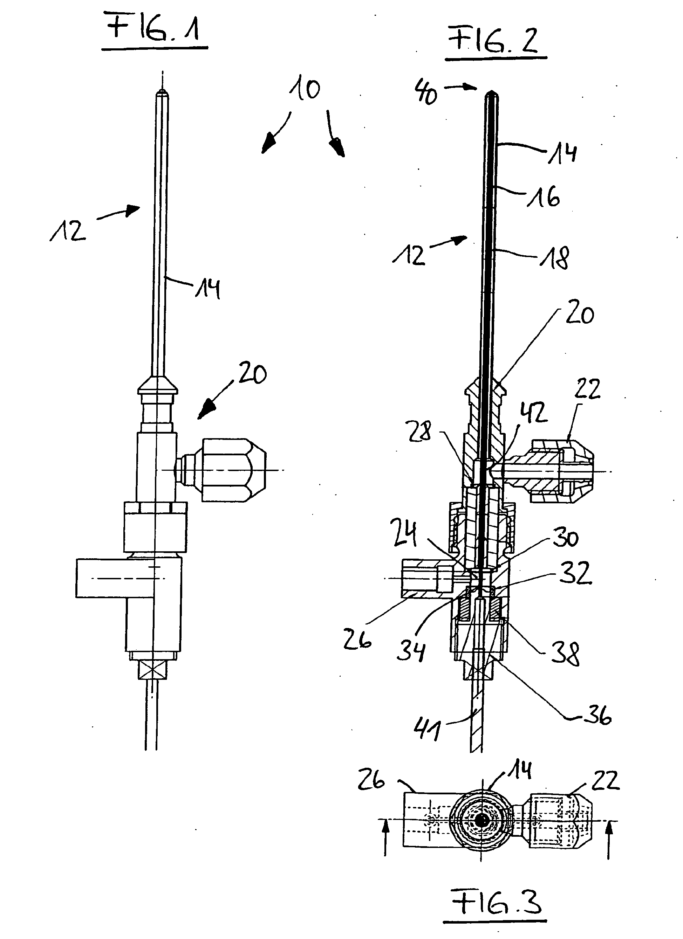

Bezug nehmend auf die Fig. 1 bis 3 wird nun eine Ausführungsform der Abgabevorrichtung in Form einer Düse zur Beschichtung von Behältern beschrieben.

Die Abgabevorrichtung 10 weist einen länglichen Düsenabschnitt 12 auf, der aus mehreren, vorzugsweise konzentrisch zueinander angeordneten Rohrstücken gebildet ist. Das äußerste Rohr ist ein sog. Mantelrohr 14, in welchem ein Steigrohr 16 enthalten ist. Der Innenumfangsrand des Mantelrohrs 14 und der Außenumfang des Steigrohrs 16 bilden dabei einen ringförmigen Kanal 18, durch den Gas bzw. Luft gepresst werden kann. Dieser ringförmige Kanal 18 steht im Bereich eines Anschlussstücks 20 der Düse 10 mit einem entsprechenden Gas- bzw. Luftanschluss 22 in Verbindung, welcher mit einer entsprechenden Gas- bzw. Luftquelle (nicht dargestellt) verbunden werden kann.

Das Steigrohr 16, in welchem der abzugebende Stoff zum Zerstäuben zugeführt wird, erstreckt sich durch das Anschlussstück 20 hindurch bis zu einem Übergangsbereich 24, an welchem ein Stoffanschlussstück 26 vom Anschlussstück 20 abzweigt, wobei dieses Stoffanschlussstück 26 mit einer nicht dargestellten Stoffquelle verbunden ist bzw. werden kann. Aus der Fig. 2 ist ferner ersichtlich, dass der Bereich der Gas-/Luftzuführung durch eine Dichtung 28 abgedichtet ist. Dasselbe gilt auch für den Stoffzuführungsbereich, welcher durch weitere Dichtungen 30 und 32 abgedichtet ist.

Im Steigrohr 16 ist ein weiteres, im Durchmesser noch kleineres Rohr 34 für Lichtwellenleiter aufgenommen. Dieses Rohr ist in der Fig. 2 nur im Bereich des Stoffanschlussstücks 26 ersichtlich, wo es aus dem Steigrohr 16 austritt und in ein Sensoranschlussstück 36 übergeht bzw. eingeführt ist. Das Lichtwellenleiterrohr 34 ist mit dem Anschlussstück 36 der Sensoranordnung fest verbunden und kann durch Lösen einer zwischen dem Sensoranschlussstück 36 und dem Anschlussstück 20 der Düse wirkenden Gewindeverbindung 38 aus der Abgabevorrichtung 10 herausgenommen werden. Die im Rohr 34 aufgenommenen Lichtwellenleiter sind außerhalb der Abgabevorrichtung 10 in einer Art Kabel 41 aufgenommen.

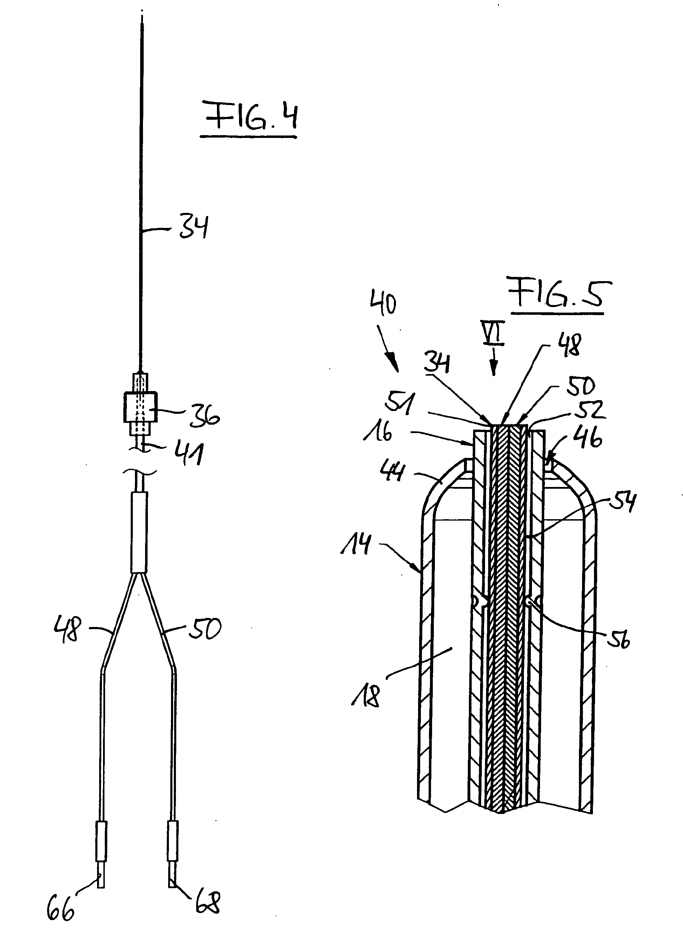

Wenn auszubringender Stoff durch das Stoffanschlussstück 26 hindurchströmt, umströmt der Stoff im Übergangsbereich 24 das Rohr 34 und steigt dann in einem ringförmigen Kanal, welcher vom Innenumfang des Steigrohrs 16 und dem Außenumfang des Lichtwellenleiterrohrs 34 gebildet ist, nach oben in Richtung der Stoffabgabeöffnung 52 (Fig. 5), welche sich im Bereich der Spitze 40 der Abgabevorrichtung bzw. Düse 10 befindet. In ähnlicher Weise umströmt zugeführtes Gas bzw. Luft das Steigrohr 16 im Übergangsbereich 42 und steigt dann im ringförmigen Kanal 18 zur Düsenspitze 40.

Die Düsenspitze 40 ist in Fig. 5 in einer vergrößerten Querschnittsdarstellung schematisch dargestellt. Das Mantelrohr 14 ist in seinem vorderen Bereich verjüngt ausgebildet, so dass eine Art Konus oder kalottenförmiges Endstück 44 gebildet ist. Der das Gas bzw. Luft enthaltende Ringkanal 18 wird hierdurch verengt, so dass durch eine Gas- bzw. Luftaustrittsöffnung 46 die Luft bzw. das Gas mit hoher Geschwindigkeit ausströmen. Wie bereits erwähnt, wird der Ringkanal 18 durch den Innenumfang des Mantelrohrs 14 und den Außenumfang des Steigrohrs 16 gebildet. Von der Ausgestaltung bzw. Krümmung des Endstücks 44 und dem Überstand in axialer Richtung des Steigrohrs 16 hängt die Breite des Sprühhebels 62 ab, so dass durch Veränderung der Form des Endstücks 44 bzw. der axialen Position des Steigrohrs 16 relativ zum Endstück 44 die gewünschte Sprühnebelbreite erzielt werden kann.

Das Steigrohr 16 steht im Bereich der Düsenspitze 40 in axialer Richtung etwas über das Mantelrohr 14 vor. Im Steigrohr 16 ist das Lichtwellenleiterrohr 34 aufgenommen, in welchem zwei Lichtwellenleiter 48 und 50 aufgenommen sind. Die Lichtwellenleiter 48 und 50 stehen in axialer Richtung etwas über das Steigrohr 16 vor, so dass das "Sichtfeld" der Lichtwellenleiter 48 und 50 nicht durch das Steigrohr 16 beeinträchtigt wird. Um die Lichtwellenleiter in diesem empfindlichen Bereich etwas zu schützen, steht auch das Lichtwellenleiterrohr 34 um etwa den gleichen Betrag relativ zum Steigrohr 16 vor. Zwischen dem Innenumfang des Steigrohrs 16 und dem Außenumfang des Lichtwellenleiterrohrs 34 ist eine Stoffabgabeöffnung 52 gebildet, aus welcher der durch den zugehörigen Ringkanal 54 zugeführte Stoff austritt und durch die vorbeiströmende Luft bzw. das vorbeiströmende Gas mitgerissen wird, so dass ein Aerosol gebildet wird. Das Vorstehen der Lichtwellenleiter 48, 50 und des Rohrs 34 führt zur Ausbildung einer Kante 51, an welcher das Anhaften von Tropfen des Stoffs erschwert ist und durch die auch ein besseres Wegblasen von Stoffrückständen zu Beginn der Aerosolbildung ermöglicht ist.

Am Innenumfang des Steigrohrs 16 sind bei 56 radiale Vorsprünge ausgebildet, welche das Lichtwellenleiterrohr 34 in seiner Relativposition zum Steigrohr 16 fixieren, wobei diese Vorsprünge 56 selbstverständlich derart in Umfangsrichtung verteilt sind, dass der Ringkanal 54 an dieser Stelle in seinem Strömungsquerschnitt nicht wesentlich verringert ist.

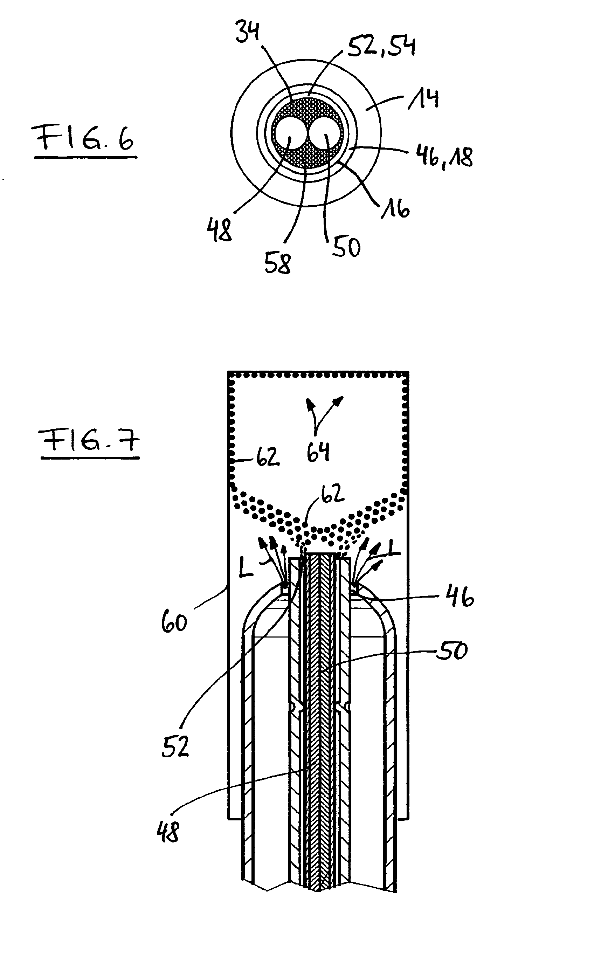

Fig. 6 ist eine schematische vergrößerte Draufsicht auf die Düsenspitze 40 entsprechend dem Pfeil 6 der Fig. 5. Aus dieser Draufsicht sind die Stoffabgabeöffnung 52, die Gasaustrittsöffnung 46 sowie die beiden Lichtwellenleiter 48 und 50 ersichtlich. Die beiden Lichtwellenleiter 48 und 50 sind im Lichtwellenleiterrohr 34 von einer Vergussmasse 58 umgeben, welche einerseits die Lichtwellenleiter 48, 50 innerhalb des Rohrs 34 stabilisiert und andererseits dafür sorgt, dass entlang der beiden Lichtwellenleiter 48, 50 keine unerwünschten Reflexionen oder dgl. auftreten.

Fig. 7 zeigt die Abgabevorrichtung bzw. Düse 10 während der Beschichtung eines Behälters 60. Dieser Behälter 60 kann beispielsweise ein Spritzenbehälter, eine Kartusche, ein Reagenzglas, ein Probenbehälter oder dgl. sein. Die durch die Austrittsöffnung 46 ausströmende Luft L bildet unterhalb der Stoffaustrittsöffnung 52 ein Strömungskissen, durch welches Stoffpartikel 62 im Luftstrom mitgerissen werden, um das Aerosol zu bilden. Aufgrund der Strömungsverhältnisse werden die Stoffpartikel 62 an der Innenseite des Behälters 60 abgelagert, so dass eine Beschichtung 64 aus den Stoffpartikeln 62 entsteht. Beim Beschichten tritt durch den ersten Lichtwellenleiter 48 Licht einer gewünschten und für die Detektion der Stoffpartikel 62 im Aerosol geeigneten Wellenlänge aus und wird an den Stoffpartikeln 62 reflektiert. Dieses reflektierte Licht wird durch den Lichtwellenleiter 50 aufgenommen und zu einer Detektionseinheit weitergeleitet, um den Anteil des reflektierten Lichts erfassen zu können.

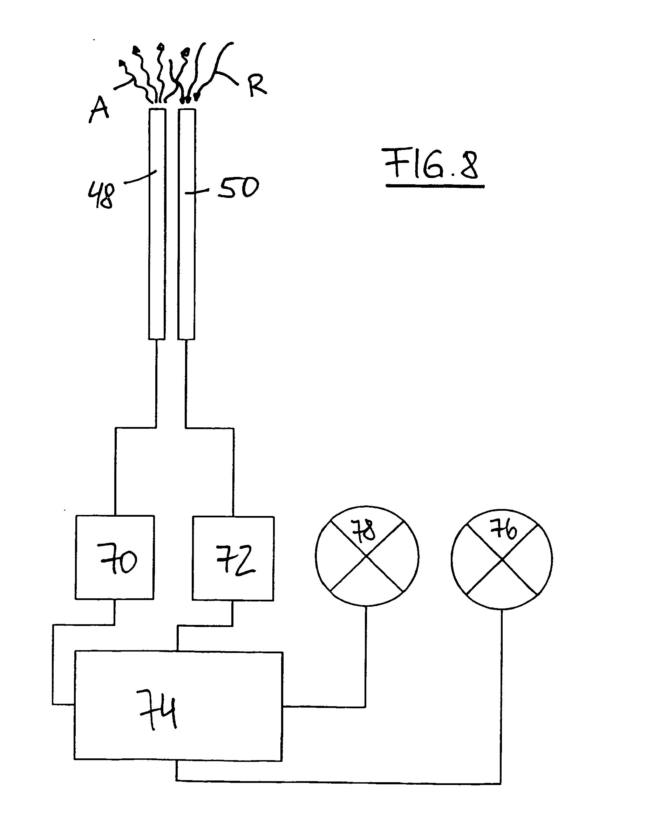

Fig. 4 zeigt die Sensoranordnung ohne Abgabevorrichtung, wobei das Lichtwellenleiterrohr 34, das Anschlussstück 36 zur Verbindung mit der Abgabevorrichtung bzw. Düse 10 und das Kabel 41 ersichtlich sind. Das Kabel 41 kann eine den Platzverhältnissen und Maschinendimensionen angepasste Länge aufweisen, so dass Endstücke 66 und 68 der Lichtwellenleiter 48 und 50 mit einer Strahlungsquelle 70 bzw. einer Detektionseinheit, insbesondere fotosensitive Zelle 72 verbunden werden können, was schematisch als Diagramm in Fig. 8 dargestellt ist. In Fig. 8 ist ferner aus dem Lichtwellenleiter 48 austretendes Licht bzw. austretende elektromagnetische Strahlung A angedeutet, und ebenso ist reflektierte elektromagnetische Strahlung R, welche vom Lichtwellenleiter 50 aufgenommen und zur fotosensitiven Zelle 72 geleitet wird, angedeutet. Sowohl die Strahlungsquelle 70 als auch die fotosensitive Zelle 72 sind mit einer Steuereinheit 74 verbunden, welche die Strahlungsquelle 70 und die Detektionseinheit 72 einerseits mit Energie versorgen und andererseits deren Betrieb ansteuert. Es wird allerdings darauf hingewiesen, dass die Energieversorgung der Quelle 70 und des Detektors 72 nicht zwangsweise durch die Steuereinheit 74 erfolgen muss, sondern dass hierzu gesondert angeordnete Energiequellen vorgesehen sein können. In Fig. 8 ist ferner schematisch angedeutet, dass die Steuerung 74 auch die Gas- bzw. Luftzufuhrpumpe 76 und die Stoffzufuhrpumpe 78 ansteuert, so dass beim Beschichten gemäß Fig. 7 das Aerosol erzeugt werden kann und gleichzeitig die optische Erfassung der Stoffpartikel 62 mittels der beiden Lichtwellenleiter 48 und 50 erfolgt. Wie aus dem Schaltbild gemäß Fig. 8 ersichtlich, bilden der Lichtwellenleiter 48 und die Strahlungsquelle 70 eine Art Sender und der Lichtwellenleiter 50 und die fotosensitive Zelle 72 bilden eine Art Empfänger für reflektierte elektromagnetische Strahlung. Die Steuerungseinheit 74 wertet die detektierte reflektierte Strahlung aus und je nach Ergebnis kann festgestellt werden, ob eine Beschichtung korrekt ausgeführt wurde, was insbesondere dann der Fall sein wird, wenn im Aerosol eine ausreichende Dichte von Stoffpartikeln 62 festgestellt werden konnte. Sofern die durch die fotosensitive Zelle 72 erzeugten Signale nicht innerhalb eines vorbestimmten Wertebereichs liegen, welcher den Rückschluss auf eine korrekte Beschichtung erlaubt, kann die Steuerungseinheit 74 beispielsweise Fehlersignale ausgeben und ggf. den Beschichtungsvorgang anhalten. Derartige Störungen können beispielsweise ein verstopftes Steigrohr sein oder eine durch Stoffablagerungen verstopfte Luftaustrittsöffnung 46 und dgl.

Wie bereits erwähnt, ist der Stoff 62 gemäß einer bevorzugten Ausführungsform Silikon, welches als Silikonöl oder Silikonemulsion verwendet wird, um den Innneraum von Spritzen zu beschichten. Bei der Beschichtung mit Silikon hat sich gezeigt, dass die Verwendung von ausgestrahltem Licht A im Wellenlängenbereich > 600 nm (rotes Licht) besonders vorteilhaft ist. Allerdings ist die Erfindung nicht auf rotes Licht eingeschränkt, sondern es können elektromagnetische Strahlungen anderer Wellenlängenbereiche verwendet werden, die zur Detektion von flüssigen oder festen Stoffpartikeln im Aerosol die gewünschten Ergebnisse erzielen. Insbesondere wird auch an die Verwendung von Infrarotstrahlung gedacht. Die Stoffpartikel 62 des Aerosols können pulverförmig (also Feststoff) oder flüssig sein, je nach Einsatzzweck der Sensoranordnung bzw. Abgabevorrichtung. Es wird auch noch darauf hingewiesen, dass die Abgabevorrichtung mit einer derartigen Sensoranordnung auch zur Befüllung von Behältern dienen kann, wobei dann beispielsweise bei einer Befüllung mit einem Pulver ein durch die Pulverabgabe entstehendes Aerosol detektiert werden kann.

## Patentansprüche

1. Abgabevorrichtung, insbesondere Düsenvorrichtung (10), zum Abgeben eines Stoffes (62) in Aerosolform oder in flüssiger Form, insbesondere zur Beschichtung von Gegenständen (60) mit dem Stoff, umfassend eine längliche Stoffzuführleitung (16) und eine Stoffabgabeöffnung (52), welche im Bereich eines freien Endes der Stoffzuführleitung (16) angeordnet ist und aus welcher der abzugebende
Stoff (62) aus der Abgabevorrichtung (10) austritt, wobei die Abgabevorrichtung (10) eine optische Sensoranordnung (34, 48, 50, 70, 72) aufweist, die derart angeordnet ist, dass im Aerosol enthaltener Stoff (62) detektierbar ist, wobei die Sensoranordnung (34, 48, 50, 70, 72) wenigstens teilweise in die Stoffzuführleitung (16) integriert ist und die Sensoranordnung wenigstens einen Lichtwellenleiter (48, 50) umfasst,
**dadurch gekennzeichnet, dass** die Sensoranordnung zwei Lichtwellenleiter (48, 50) umfasst, wobei der eine Lichtwellenleiter (48) zur Abgabe von elektromagnetischer Strahlung (A), vorzugsweise Licht oder Infrarotstrahlung, im Bereich der Stoffabgabeöffnung (52) nach außen dient, und der andere Lichtwellenleiter (50) zum Aufnehmen und zur Weiterleitung von reflektierter elektromagnetischer Strahlung (R) zu einer zugehörigen Detektionseinheit (72), vorzugsweise einer fotosen-sitiven Zelle, dient, wobei die Lichtwellenleiter (48, 50) in die längliche Stoffzuführleitung (16) eingesetzt sind.

2. Abgabevorrichtung nach Anspruch 1, **dadurch gekennzeichnet, dass** die Sensoranordnung (34, 48, 50, 70, 72) relativ zur Stoffzuführleitung (16) derart fixiert oder fixierbar ist, dass zwischen dem Innenumfang der Stoffzuführleitung (16) und einer Außenkontur eines in der Stoffzuführleitung (16) aufgenommenen Abschnitts (34) der Sensoranordnung (48, 50) eine Art Ringspalt (54) gebildet ist, durch welchen der Stoff (62) zur Stoffabgabeöffnung (52) strömt.

3. Abgabevorrichtung nach einem der Ansprüche 1 oder 2, **dadurch gekennzeichnet, dass** die Sensoranordnung (34, 48, 50) im Bereich der Stoffabgabeöffnung (52) der Stoffzuführleitung (16) in axialer Richtung über den Rand der Stoffzuführleitung (16) vorsteht.

4. Abgabevorrichtung nach einem der Ansprüche 1 bis 3, **dadurch gekennzeichnet, dass** die Sensoranordnung eine Strahlungsquelle (70), vorzugsweise Lichtquelle oder Infrarotquelle, umfasst.

5. Abgabevorrichtung nach einem der Ansprüche 1 bis 4, **dadurch gekennzeichnet, dass** die ausgesendete elektromagnetische Strahlung rotes Licht ist mit einer Wellenlänge von etwa 600 nm und mehr.

6. Abgabevorrichtung nach einem der Ansprüche 1 bis 5, **dadurch gekennzeichnet, dass** der bzw. die Lichtwellenleiter (48, 50) in einem Rohr (34) aufgenommen ist/sind, das in der Stoffzuführleitung (16) vorzugsweise konzentrisch angeordnet ist, wobei die Lichtwellenleiter (48, 50) im Rohr vorzugsweise von einer Vergussmasse (58) umgeben sind.

7. Abgabevorrichtung nach einem der Ansprüche 1 bis 6, **dadurch gekennzeichnet, dass** die Lichtwellenleiter (48, 50) im Bereich der Stoffabgabeöffnung (52) der Stoffzuführleitung (16) in axialer Richtung über den Rand der Stoffzuführleitung (16) vorstehen.

8. Abgabevorrichtung nach einem der vorhergehenden Ansprüche, **dadurch gekennzeichnet, dass** die Stoffzuführleitung (16) von einer vorzugsweise konzentrisch angeordneten Gaszuführleitung (14) umgeben ist, deren Gasabgabeöffnung (46) im Bereich der Stoffabgabeöffnung (52) liegt, wobei vorzugsweise die Stoffabgabeöffnung (52) in Abgaberichtung des Stoffes axial vor der Gasabgabeöffnung (46) liegt.

9. Abgabevorrichtung nach Anspruch 8, **dadurch gekennzeichnet, dass** die Stoffzuführleitung (16, 54) und die Gaszuführleitung (14, 18) mit einem Anschlussstück (20, 22, 26) verbunden sind, an welchem Versorgungsleitungen für den Stoff und für Gas anschließbar sind.

10. Abgabevorrichtung nach Anspruch 8 oder 9, **dadurch gekennzeichnet, dass** das Gas in der Gaszuführleitung ein Gasgemisch ist, vorzugsweise Luft.

11. Abgabevorrichtung nach Anspruch 9 oder 10, **dadurch gekennzeichnet, dass** sich die Lichtwellenleiter (48, 50) durch das Anschlusstück (20) hindurcherstrecken und an dem vom Stoffzuführrohr (16) gegenüberliegenden Ende des Anschlussstücks (20) aus diesem herausgeführt sind, wobei die Lichtwellenleiter (48, 50) außerhalb des Anschlussstücks vorzugsweise von einer beweglichen Hülle (40) umgeben sind.

12. Abgabevorrichtung nach einem der Ansprüche 9 bis 11, **dadurch gekennzeichnet, dass** die Sensoranordnung (34, 48, 50, 36) mit dem Anschlussstück (20) gekoppelt oder koppelbar ist, vorzugsweise über eine Presssitzverbindung oder eine Gewindeverbindung (38).

13. Abgabevorrichtung nach einem der vorhergehenden Ansprüche, **dadurch gekennzeichnet, dass** der abzugebende Stoff (62) pulverförmig oder flüssig ist.

14. Abgabevorrichtung nach Anspruch 13, **dadurch gekennzeichnet, dass** der abzugebende Stoff (62) Silikon ist, vorzugsweise in Form einer Silikonemulsion oder von Silikonöl.

15. Vorrichtung zum Behandeln von Behältern, insbesondere Spritzenbehältern, Karpulen, Vials und dergleichen, umfassend wenigstens eine Waschstation und/oder wenigstens eine Trockenstation und/oder wenigstens eine Sterilisierstation, **dadurch gekennzeichnet, dass** sie ferner wenigstens eine Beschichtungsstation umfasst, die wenigstens eine Abgabevorrichtung (10) gemäß einem der vorhergehenden Ansprüche umfasst, um den Behälter auf seiner Innenseite zu beschichten.

## Claims

1. Dispensing device, in particular a nozzle device (10), for dispensing a substance (62) in aerosol form or in liquid form, in particular for coating objects (60) with the substance, comprising an elongated substance supply line (16) and substance dispensing opening (52) which is arranged in the area of one free end of the substance supply line (16) and from which the substance (62) to be dispensed exits from the dispensing device (10), wherein the dispensing device (10) comprises an optical sensor arrangement (34, 48, 50, 70, 72) which is arranged such that substance (62) contained in the aerosol can be detected, wherein the sensor arrangement (34, 48, 50, 70, 72) is integrated at least partly into the substance supply line (16) and the sensor arrangement comprises at least one fibre optic cable (48, 50), **characterised in that** the sensor arrangement comprises two fibre optic cables (48, 50), wherein one fibre optic cable (48) is used for the delivery of electromagnetic radiation (A) to the outside, preferably light or infrared radiation, in the area of the substance dispensing opening (52) and the other fibre optic cable (50) is used for picking up and conveying reflected electromagnetic radiation (R) to an associated detection unit (72), preferably a photosensitive cell, wherein the fibre optic cables (48, 50) are inserted into the elongated substance supply line (16).

2. Dispensing device according to claim 1, **characterised in that** the sensor arrangement (34, 48, 50, 70, 72) is fixed or can be fixed relative to the substance supply line (16) such that between the inner circumference of the substance supply line (16) and an external contour of a section (34) of the sensor arrangement (48, 50) mounted in the substance supply line (16) a kind of annular gap (54) is formed through which the substance (62) flows to the substance dispensing opening (52).

3. Dispensing device according to either of claims 1 or 2, **characterised in that** the sensor arrangement (34, 48, 50) projects in the area of the substance dispensing opening (52) of the substance supply line (16) in axial direction over the edge of the substance supply line (16).

4. Dispensing device according to one of claims 1 to 3, **characterised in that** the sensor arrangement comprises a radiation source (70), preferably a light source or infrared source.

5. Dispensing device according to one of claims 1 to 4, **characterised in that** the emitted electromagnetic radiation is red light with a wavelength of about 600 nm and above.

6. Dispensing device according to one of claims I to 5, **characterised in that** the fibre optic cable or cables (48, 50) is/are mounted in a tube (34) which is arranged preferably concentrically in the substance supply line (16), wherein the fibre optic cables (48, 50) are preferably surrounded in the tube by a grouting mass (58).

7. Dispensing device according to one of claims 1 to 6, **characterised in that** the fibre optic cables (48, 50) in the area of the substance dispensing opening (52) of the substance supply line (16) project in axial direction over the edge of the substance supply line (16).

8. Dispensing device according to one of the preceding claims, **characterised in that** the substance supply line (16) is surrounded by a preferably concentrically arranged gas supply line (14), the gas dispensing opening (46) of which is in the area of the substance dispensing opening (52), whereby preferably the substance dispensing opening (52) in the dispensing direction of the substance is situated axially in front of the gas dispensing opening (46).

9. Dispensing device according to claim 8, **characterised in that** the substance supply line (16, 54) and the gas supply line (14, 18) are connected to a connection piece (20, 22, 26), to which supply lines for the substance and for the gas can be connected.

10. Dispensing device according to claim 8 or 9, **characterised in that**
the gas in the gas supply line is a gas mixture, preferably air.

11. Dispensing device according to claim 9 or 10, **characterised in that** the fibre optic cables (48, 50) extend through the connection piece (20) and at the end of the connection piece (20) opposite the substance supply tube (16) are guided out of the latter, wherein the fibre optic cables (48, 50) are surrounded outside the connection piece preferably by a movable casing (40).

12. Dispensing device according to one of claims 9 to 11, **characterised in that** the sensor arrangement (34, 48, 50, 36) is coupled or can be coupled to the connection piece, preferably by means of a press fitting connection or a screw connection (38).

13. Dispensing device according to one of the preceding claims, **characterised in that** the substance (62) to be dispensed is a powder or liquid.

14. Dispensing device according to claim 13, **characterised in that** the substance (52) to be dispensed is silicon, preferably in the form of a silicon emulsion or silicon oil.

15. Device for treating containers, in particular spray containers, cartridges, vials and the like, comprising at least one washing station and/or at least one drying station and/or at least one sterilising station, **characterised in that** it also comprises at least one coating station which comprises at least one dispensing device (10) according to one of the preceding claims for coating the container on the inside.

## Revendications

1. Dispositif de distribution, en particulier dispositif à buse (10), pour la distribution d'une matière (62) sous forme d'aérosol ou sous forme liquide, en particulier pour le revêtement d'objets (60) avec la matière, comprenant une conduite allongée d'arrivée de matière (16) et une ouverture de distribution de matière (52), qui est disposée dans la région d'une extrémité libre de la conduite d'arrivée de matière (16) et par laquelle la matière à distribuer (62) sort du dispositif de distribution (10), dans lequel le dispositif de distribution (10) présente un agencement de capteur optique (34, 48, 50, 70, 72), qui est disposé de telle manière que la matière (62) contenue dans l'aérosol puisse être détectée, dans lequel l'agencement de capteur optique (34, 48, 50, 70, 72) est au moins partiellement intégré dans la conduite d'arrivée de matière (16) et l'agencement de capteur comprend au moins un guide d'onde lumineuse (48, 50), **caractérisé en ce que** l'agencement de capteur comprend deux guides d'onde lumineuse (48, 50), dans lequel un des guides d'onde lumineuse (48) sert à distribuer un rayonnement électromagnétique (A), de préférence un rayonnement lumineux ou infrarouge, vers l'extérieur dans la région de l'ouverture de distribution de matière (52), et l'autre guide d'onde lumineuse (50) sert à recevoir et retransmettre un rayonnement électromagnétique réfléchi (R) vers une unité de détection correspondante (72), de préférence une cellule photosensible, dans lequel les guides d'onde lumineuse (48, 50) sont introduits dans la conduite allongée de distribution de matière (16).

2. Dispositif de distribution selon la revendication 1, **caractérisé en ce que** l'agencement de capteur (34, 48, 50, 70, 72) est ou peut être fixé par rapport à la conduite d'arrivée de matière (16), de telle manière qu'une sorte de fente annulaire (54) soit formée entre le pourtour intérieur de la conduite d'arrivée de matière (16) et un contour extérieur d'une partie de l'agencement de capteur (48, 50) logée dans la conduite d'arrivée de matière (16), fente à travers laquelle la matière (62) s'écoule vers l'ouverture de distribution de matière (52).

3. Dispositif de distribution selon l'une quelconque des revendications 1 ou 2, **caractérisé en ce que** l'agencement de capteur (34, 48, 50) est en saillie en direction axiale au-delà du bord de la conduite d'arrivée de matière (16) dans la région de l'ouverture de distribution de matière (52) de la conduite d'arrivée de matière (16).

4. Dispositif de distribution selon l'une quelconque des revendications 1 à 3, **caractérisé en ce que** l'agencement de capteur comprend une source de rayonnement (70), de préférence une source de lumière ou une source infrarouge.

5. Dispositif de distribution selon l'une quelconque des revendications 1 à 4, **caractérisé en ce que** le rayonnement électromagnétique émis est une lumière rouge avec une longueur d'onde d'environ 600 nm et plus.

6. Dispositif de distribution selon l'une quelconque des revendications 1 à 5, **caractérisé en ce que** le ou les guide(s) d'onde lumineuse (48, 50) est/sont contenu(s) dans un tube (34), qui est disposé, de préférence de façon concentrique, dans la conduite d'arrivée de matière (16), dans lequel les guides d'onde lumineuse (48, 50) sont de préférence entourés d'une masse d'enrobage (58) dans le tube.

7. Dispositif de distribution selon l'une quelconque des revendications 1 à 6, **caractérisé en ce que** les guides d'onde lumineuse (48, 50) sont en saillie en direction axiale au-delà du bord de la conduite d'arrivée de matière (16) dans la région de l'ouverture de distribution de matière (52) de la conduite d'arrivée de matière (16).

8. Dispositif de distribution selon l'une quelconque des revendications précédentes, **caractérisé en ce que** la conduite d'arrivée de matière (16) est entourée d'une conduite d'arrivée de gaz (14) disposée de préférence de façon concentrique, dont l'ouverture de distribution de gaz (46) est située dans la région de l'ouverture de distribution de matière (52), dans lequel l'ouverture de distribution de matière (52) est de préférence située axialement avant l'ouverture de distribution de gaz (46) dans la direction de distribution de la matière.

9. Dispositif de distribution selon la revendication 8, **caractérisé en ce que** la conduite d'arrivée de matière (16, 54) et la conduite d'arrivée de gaz (14, 18) sont reliées par une pièce de raccordement (20, 22, 26), à laquelle des conduites d'alimentation pour la matière et pour le gaz peuvent être raccordées.

10. Dispositif de distribution selon la revendication 8 ou 9, **caractérisé en ce que** le gaz dans la conduite d'arrivée de gaz est un mélange gazeux, de préférence l'air.

11. Dispositif de distribution selon la revendication 9 ou 10, **caractérisé en ce que** les guides d'onde lumineuse (48, 50) s'étendent à travers la pièce de raccordement (20) et sont menés hors de celle-ci à l'extrémité de la pièce de raccordement (20) opposée au tube d'arrivée de matière (16), dans lequel les guides d'onde lumineuse (48, 50) sont, à l'extérieur de la pièce de raccordement, de préférence entourés par une gaine mobile (40).

12. Dispositif de distribution selon l'une quelconque des revendications 9 à 11, **caractérisé en ce que** l'agencement de capteur (34, 48, 50, 36) est ou peut être couplé à la pièce de raccordement (20), de préférence par un assemblage à ajustement serré ou un assemblage fileté (38).

13. Dispositif de distribution selon l'une quelconque des revendications précédentes, **caractérisé en ce que** la matière à distribuer (62) est pulvérulente ou liquide.

14. Dispositif de distribution selon la revendication 13, **caractérisé en ce que** la matière à distribuer (62) est le silicone, de préférence sous la forme d'une émulsion de silicone ou d'une huile de silicone.

15. Dispositif de traitement de réservoir, en particulier de réservoirs de seringues, de carpules, de flacons et analogues, comportant au moins un poste de lavage et/ou au moins un poste de séchage et/ou au moins un poste de stérilisation, **caractérisé en ce qu'**il comporte en outre au moins un poste de revêtement, qui comprend au moins un dispositif de distribution (10) selon l'une quelconque des revendications précédentes, afin de revêtir le réservoir sur sa face intérieure.
